# EUROPÄISCHE PATENTSCHRIFT

(11) **EP 3 396 644 B1**
(45) Veröffentlichungstag und Bekanntmachung des Hinweises auf die Patenterteilung: **24.09.2025**
(21) Anmeldenummer: 18169234.4
(22) Anmeldetag: 25.04.2018
(51) Int. Cl.: G08B 3/10, G08B 15/00, G08B 13/14, G08B 21/02, G08B 25/01

(54) **MOBILES ABWEHRSYSTEM MIT EINER MOBILEN SIGNALEINHEIT UND EINER MOBILEN BEDIENEINHEIT**
MOBILE DEFENCE SYSTEM WITH MOBILE SIGNALLING UNIT AND MOBILE CONTROL UNIT
SYSTÈME DE DÉFENSE MOBILE AVEC UNITÉ DE SIGNALISATION MOBILE ET UNITÉ DE COMMANDE MOBILE

(30) Priorität: 28.04.2017 DE 102017109284; 05.05.2017 DE 102017109724
(43) Veröffentlichungstag der Anmeldung: 31.10.2018
(73) Patentinhaber: Bernitz, Georg, 90441 Nürnberg (DE)
(72) Erfinder: Bernitz, Georg, 90441 Nürnberg (DE); Bernitz, Daniel, 93049 Regensburg (DE)
(74) Vertreter: Canzler & Bergmeier Patentanwälte Partnerschaft mbB

(56) Entgegenhaltungen:
- WO-A2-03/033842
- DE-A1- 102013 014 849
- US-A- 6 133 830
- US-A1- 2003 067 392
- US-A1- 2004 113 770

## Beschreibung

Die Erfindung betrifft ein mobiles Abwehrsystem zum Abwehren körperlicher Übergriffe mit einer mobilen Signaleinheit zum Mitführen in oder an einem körpernahen Gegenstand, der eine Sirene umfasst, mittels der ein akustisches Abwehrsignal erzeugbar ist, und einer mobilen Bedieneinheit zum Aktivieren der mobilen Signaleinheit.

Aus der DE 20 2004 006 170 U1 ist eine Vorrichtung zur Selbstverteidigung gegen Angriffe von außen bekannt, bei welchem eine Waffe in einer Entnahmeaufhängung angeordnet ist. Beim Entnehmen des Gegenstandes aktiviert ein zwischen der Waffe und der Entnahmeaufhängung angeordneter Kontakt eine Sirene. Da die Entnahmeaufhängung bevorzugt in geschlossenen Behältnissen wie Taschen angeordnet ist, kann viel Zeit vergehen, bis die Waffe aus der Entnahmeaufhängung entnommen und schließlich der Alarm aktiviert werden kann.

Aus der DE 10 2013 014 849 A1 ist ein System und ein Verfahren der Verlust-Vorbeugung, des Auffindens und Verfolgens von persönlichen Besitztümern durch die Benutzung von kabelloser Hardware und mobilen elektronischen Einrichtungen, wie Smartphones, Tabletcomputern und tragbaren Computern bekannt. Das System umfasst eine mobile Kommunikationseinrichtung mit einem Prozessor, einer Antenne, einer Sende- und Empfangseinheit, die mit der Antenne und dem Prozessor elektrisch verbunden ist, und ein computerlesbares Medium, das mit dem Prozessor verbunden ist und einen durch den Prozessor lesbaren Code enthält, zum Ausführen eines Verfahrens. Das Verfahren enthält das Empfangen einer kabellosen Kommunikation von einer kabellosen Vorrichtung, die an einen Gegenstand angebracht ist, das Bestimmen einer Signalstärkenablesung von der Kommunikation und das Bestimmen, ob die Signalstärkenablesung unter einem adaptierbaren Alarmgrenzwert liegt , und kann, wenn die Signalstärkenablesung unter dem Alarmgrenzwert liegt, den Benutzer alarmieren.

Aus der US 6,133,830 A ist ein bewegungsempfindliches Diebstahldetektorsystem für tragbare Artikel bekannt, das eine Zwei-Wege-Kommunikation zwischen der Diebstahldetektoreinheit, die im tragbaren Artikel installiert oder am tragbaren Artikel befestigt ist, und der vom Besitzer mitgeführten Steuereinheit ermöglicht. Der Diebstahldetektor übermittelt Warnmeldungen an die Steuereinheit, so dass der Benutzer nach Fehlalarmen suchen und bei Bedarf einen Alarm am tragbaren Artikel auslösen kann. Ein zeitbasierter Alarmunterdrückungsalgorithmus ermöglicht es, das System in seinem scharfen Zustand zu tragen, ohne häufig wiederholte Alarme an der Steuereinheit zu erzeugen. Eine zweite Alarmfunktion, die durch den Modusschalter ausgewählt wird, löst als Reaktion auf eine Bewegung gemäß einer adaptiven Alarmsequenz automatisch einen Alarm aus. Der adaptive Alarm variiert den Alarm in Reaktion auf die Häufigkeit und Dauer der Bewegung, so dass eine isolierte Bewegung eine Warnung auslöst, eine anhaltende Bewegung jedoch einen Vollalarm auslöst.

Aus der WO 03/033842 A2 ist ein elektronisches Gerät bekannt, das in ein persönliches Gepäckstück integriert ist und mit einer elektronischen Alarmsirene (Alarm), einem bewegungsempfindlichen elektronischen Auslöser, einer eigenständigen drahtlosen Fernbedienung, einem numerischen Tastenfeld, das die numerische sequenzielle Sicherheitseingabe sowie das Scharf- und Unscharfschalten des Bewegungssensors und der Alarmsirene (Alarm) ermöglicht, ausgestattet ist.

Die DE 10 2013 014 849 A1 offenbart eine mobile Kommunikationseinrichtung. Diese umfasst einen Prozessor und eine Sende- und Empfangseinrichtung. Die Einrichtung ist elektrisch mit dem Prozessor und einer Antenne verbunden. Ebenfalls Teil der Offenbarung ist ein computerlesbares Medium. Dieses Medium ist verbunden mit dem Prozessor. Es führt einen Code aus, der ein Verfahren implementiert. Dieses Verfahren beinhaltet das Empfangen kabelloser Kommunikation. Diese Kommunikation kommt von einer Gegenstelle, die an einem Gegenstand angebracht ist. Ferner ist eine Signalstärkenablesung Teil des Verfahrens. Dabei wird bestimmt, ob die Signalstärkenablesung unter einem Alarmgrenzwert liegt. Liegt sie darunter, wird ein Benutzer alarmiert.

Die US 6,133,830 A offenbart ein bewegungssensitives Diebstahldetektorsystem für tragbare Artikel. Es bietet eine Zwei-Wege-Kommunikation zwischen dem Diebstahldetektor und der Steuereinheit. Die Steuereinheit wird vom Besitzer getragen oder ist am tragbaren Artikel befestigt. Das System kommuniziert Warnungen an die Steuereinheit. Dies ermöglicht dem Benutzer, Fehlalarme zu überprüfen und einen Alarm auszulösen, wenn nötig. Ein zeitbasierter Algorithmus zur Unterdrückung von Warnungen verhindert wiederholte Alarme. Eine zweite Alarmfunktion löst automatisch einen Alarm bei Bewegung aus. Dies geschieht gemäß einer adaptiven Alarmsequenz. Die adaptive Alarmsequenz passt den Alarm an Häufigkeit und Dauer der Bewegung an. Dadurch wird bei isolierter Bewegung eine Warnung, bei anhaltender Bewegung ein vollständiger Alarm ausgelöst.

Die WO 03/033842 A2 offenbart eine tragbare Gepäckeinheit mit elektronischer Sicherung. Diese ermöglicht das Eingeben einer sequenziellen Sicherheitsnummer zur Aktivierung oder Deaktivierung eines bewegungsempfindlichen Auslösers und einer Alarm-Sirene. Die Einheit kann unbeaufsichtigt bleiben und sendet ein hörbares Signal bei Bewegung aus ihrer stationären Position. Aus der WO 03/033842 A2 ist weiterhin bekannt, dass die Sicherheitsgepäckeinheit mit einer separaten, selbstständigen, drahtlosen Fernbedienung ausgestattet ist. Diese aktiviert die Alarm-Sirene der Einheit aus der Ferne, wenn sie deaktiviert ist. Dies erleichtert das Auffinden der Einheit, falls sie gewaltsam oder durch Täuschung entfernt wird und wirkt somit diebstahlhemmend.

Die der Erfindung zugrundeliegende Aufgabe wird durch die Merkmale des unabhängigen Patentanspruchs 1 gelöst. Weitere vorteilhafte Ausgestaltungen ergeben sich aus den Unteransprüchen und den Zeichnungen.

Vorgeschlagen wird ein mobiles Abwehrsystem mit einer mobilen Signaleinheit zum Mitführen in oder an einem körpernahen Gegenstand mit mindestens einer Sirene. Der körpernahe Gegenstand ist insbesondere ein Bekleidungsstück oder ein Tragebehältnis. Vorzugsweise ist der körpernahe Gegenstand ein Geldbeutel, eine Handtasche, Reisetasche und/oder ein Rucksack. Mittels der Sirene ist ein akustisches Abwehrsignal erzeugbar. Die Sirene ist vorzugsweise mit Gas oder elektrisch betrieben. Die Signaleinheit umfasst eine kabellose erste Schnittstelle, über die die Sirene von einer dafür vorgesehenen Bedieneinheit fernbedient aktivierbar und deaktivierbar ist. Die Signaleinheit ist derart ausgebildet, dass die Sirene mit einem Aktivierungsbefehl manuell aktivierbar ist, wenn der Aktivierungsbefehl mit einem in einer Speichereinheit der Signaleinheit und/oder der dafür vorgesehenen Bedieneinheit hinterlegten Aktivierungscode übereinstimmt. Der Aktivierungsbefehl ist codiert. Der Aktivierungsbefehl ist eine Geste und/oder ein Sprachbefehl. Bei einem körperlichen Übergriff kann somit beispielsweise der Aktivierungsbefehl eine Abwehrhaltung bzw. Abwehrgeste sein, über die die Sirene aktivierbar ist. Ferner wird vorteilhafterweise durch die codierte Deaktivierung verhindert, dass das Abwehrsignal vom Angreifer deaktiviert werden kann.

Zusätzlich ist es vorteilhaft, wenn die Signaleinheit derart ausgebildet ist, dass die Sirene nach dem kabellosen Verbinden mit der Bedieneinheit automatisch aktivierbar ist, wenn eine Verbindungssignalstärke der Bedieneinheit einen Schwellwert unterschreitet und/oder die kabellose Verbindung zur Bedieneinheit unterbrochen wird. Hierdurch kann beispielsweise bei einem Handtaschendiebstahl sichergestellt werden, dass die Sirene automatisch aktiviert wird, wenn sich die mobile Signaleinheit bzw. insbesondere die Handtasche zu weit von der mobilen Bedieneinheit bzw. dem Besitzer entfernt.

Vorteilhaft ist es, wenn die Signaleinheit einen Druckbehälter umfasst, der über ein Ventil mit der mit Gas betriebenen Sirene verbunden ist.

Die mobile Signaleinheit ist vorzugsweise derart kompakt ausgebildet, dass sie ohne zu stören in oder an dem Gegenstand angeordnet werden kann. Insbesondere Frauen oder Kindern ist dadurch ermöglicht, die mobile Signaleinheit dauerhaft körpernah bei sich zu tragen. Im Notfall, beispielsweise einem Diebstahl oder Überfall, kann das Opfer die Sirene über die kabellose erste Schnittstelle mit einer dafür vorgesehenen Bedieneinheit fernbedient aktivieren. Die Bedieneinheit ist mobil und vorzugsweise handlich ausgebildet, so dass diese bei einem Übergriff schnell betätigt werden kann. Nachdem die Sirene aktiviert wurde, um das akustische Abwehrsignal zu erzeugen, ist diese vorzugsweise nur schwer, insbesondere über einen codierten Deaktivierungsbefehl, oder gar nicht deaktivierbar. Wenn die mobile Signaleinheit beispielsweise in eine Handtasche eingenäht ist und diese gestohlen wird, kann der Handtaschenbesitzer die Sirene schnell und einfach über die kabellose erste Schnittstelle betätigen. Dies erfolgt manuell über einen Aktivierungsbefehl Die zur Betätigung notwendige Bedieneinheit wird dabei vorzugsweise direkt am Körper getragen. Zusätzlich ist es ebenso denkbar, die Sirene bei körperlichen Übergriffen zu aktivieren, um den Angreifer durch das Abwehrsignal zu erschrecken und im besten Fall zu verscheuchen. Das Abwehrsignal könnte beispielsweise in Form von Worten ausgegeben werden. Das akustische Abwehrsignal liegt über einer menschlichen Schmerzempfindungsschwelle. Der Schalldruck des Abwehrsignals ist vorzugsweise größer als 60 dB. Vorzugsweise ist der Schalldruck des Abwehrsignals größer als 100 dB. Die kabellose erste Schnittstelle erlaubt eine ferngesteuerte Aktivierung der Sirene, um möglichst schnell auf Überfälle reagieren zu können und dadurch einen Hilferuf zu signalisieren.

Von Vorteil ist es, wenn die erste Schnittstelle eine Funkschnittstelle und/oder eine Infrarotschnittstelle ist. Die Funkschnittstelle ist vorzugsweise ausgebildet, um beispielsweise Funkwellen, wie z.B. ein Bluetooth-Signal, zu empfangen und/oder zu senden. Die Infrarotschnittstelle ist vorzugsweise als Empfänger und/oder Sender von Infrarotstrahlung ausgebildet. Vorzugsweise ist die erste Schnittstelle derart ausgebildet, dass ihre Fähigkeit, Informationen zu empfangen, uneingeschränkt funktionsfähig ist, selbst wenn die erste Schnittstelle beispielsweise in einer Tasche angeordnet ist. Durch die erste Schnittstelle ist es möglich, die Aktivierung der Signale selbst dann zu veranlassen, wenn die Signaleinheit nicht direkt zugänglich ist. Alternativ oder ergänzend ist es von Vorteil wenn die erste Schnittstelle unidirektional oder bidirektional ausgebildet ist. Die erste Schnittstelle ist unidirektional ausgebildet, so dass über diese ausschließlich Signale empfangen werden können. Die erste Schnittstelle ist bidirektional ausgebildet, so dass sowohl Signale empfangen als auch gesendet werden können. Unidirektion bedeutet, dass vorzugsweise nur das Empfangen oder Senden von Signalen möglich ist. Bidirektional bedeutet, dass vorzugsweise das Empfangen und Senden von Signalen möglich ist. Bei einer bidirektionalen ersten Schnittstelle ist es vorteilhaft, wenn die Signaleinheit zumindest eine Statusmeldung senden kann. Die Kommunikation der mobilen Signaleinheit mit einem das Signal auslösenden Gerät kann somit örtlich ungebunden umgesetzt werden.

Die Signaleinheit weist ein Sperrsystem auf. Mittels des Sperrsystems ist die Sirene nach ihrer Aktivierung nur mit einem unmittelbar in die Signaleinheit eingebbaren Deaktivierungsbefehl deaktivierbar, wenn dieser Deaktivierungsbefehl mit einem in der Speichereinheit der Signaleinheit und/oder der dafür vorgesehenen Bedieneinheit hinterlegten Deaktivierungscode übereinstimmt. Alternativ ist das Sperrsystem mit einem mittelbar von der dafür vorgesehenen Bedieneinheit übermittelten Deaktivierungsbefehl deaktivierbar. Das Sperrsystem ist vorzugsweise derart ausgebildet, dass die Sirene lediglich abgestellt werden kann, wenn man Kenntnis über den Deaktivierungscode hat. Der Deaktivierungscode ist vorzugsweise vor der ersten Verwendung der mobilen Signaleinheit zu definieren. Der Deaktivierungscode ist vorzugsweise in der mobilen Signaleinheit selbst oder der dafür vorgesehenen Bedieneinheit abgespeichert. Der Deaktivierungscode kann beispielsweise ein Zahlencode sein, der an der Bedieneinheit eingegeben werden muss. Alternativ oder zusätzlich kann es sich um eine Geste, insbesondere Handgeste, und/oder einen Sprachbefehl handeln. Durch das Sperrsystem wird sichergestellt, dass der Verbrecher das Signal nicht abstellen kann.

Die Signaleinheit umfasst eine erste Steuereinheit, mit der der Aktivierungsbefehl mit dem hinterlegten Aktivierungscode abgleichbar ist, der Deaktivierungsbefehl mit dem hinterlegten Deaktivierungscode vergleichbar ist, die kabellose Verbindung zur Bedieneinheit überwachbar ist und/oder die Sirene zum Aktivieren und/oder Deaktivieren ansteuerbar ist.

Das Sperrsystem umfasst somit vorteilhafterweise eine erste Steuereinheit, mittels der nach der Aktivierung der Sirene die erste Schnittstelle gesperrt und/oder entsperrt werden kann. Die erste Steuereinheit ist vorzugsweise ausgebildet, die Kontaktierung der ersten Schnittstelle zu detektieren. Die Kontaktierung der ersten Schnittstelle bedeutet vorzugsweise, dass die Sirene ausgelöst und das Abwehrsignal erzeugt wird. Weiterhin ist die erste Steuereinheit vorzugsweise ausgebildet, die erste Schnittstelle zu sperren. In der ersten Steuereinheit ist vorzugsweise der Deaktivierungscode hinterlegt, anhand von dem der eingegebene Deaktivierungsbefehls auf seine Richtigkeit überprüft wird. Vorzugsweise wird die erste Schnittstelle von der ersten Steuereinheit erst freigegeben, wenn der richtige Deaktivierungsbefehl registriert wurde. Auf diese Weise kann sichergestellt werden, dass das Abwehrsignal von dem Angreifer nicht ausgeschaltet werden kann.

Von Vorteil ist es, wenn die Signaleinheit ein Betätigungselement aufweist, mittels dem der Deaktivierungsbefehl zum Deaktivieren der Sirene eingebbar ist. Das Betätigungselement ist vorzugsweise derart ausgebildet, dass die Sirene elektrisch und/oder elektromechanisch ausgelöst wird. Das Betätigungselement ist vorzugsweise eine Drucktaste. Das Betätigungselement ist vorzugsweise an einem leicht zugänglichen Ort angeordnet. Beispielsweise kann die mobile Signaleinheit eine oder mehrere Drucktasten aufweisen, mittels der die Sirene manuell ausgelöst werden kann. Alternativ ist das Betätigungselement vorzugsweise eine Druckkappe, welche heruntergerückt werden muss, um das Alarmsignal auszulösen. Die mobile Signaleinheit ist beispielsweise ein akustisches Alarmgerät. Das Betätigungselement ist vorzugsweise an einem Ring, Armband, Gürtel und/oder in einer Jackentasche oder dergleichen befestigt, so dass die Sirene einfach aktiviert werden kann. Sollte die Sirene fälschlicherweise aktiviert werden, ist diese mittels des Deaktivierungsbefehls schnell deaktivierbar, wenn dieser mit dem hinterlegten Deaktivierungscode übereinstimmt. Beispielsweise kann der manuelle Deaktivierungsbefehl ein mehrmaliges Drücken des Betätigungselements, insbesondere in einer bestimmten Zeitfolge, sein.

Es stellt einen Vorteil dar, wenn die Signaleinheit ein Schutzgehäuse aufweist. In dem Schutzgehäuse ist die Sirene, die erste Steuereinheit ein Stromspeicher und/oder die erste Schnittstelle vor äußerer Gewalteinwirkung geschützt aufgenommen. Das Schutzgehäuse ist insbesondere aus Metall und/oder einem Faserverbundwerkstoff. Das Signal wird vorzugsweise wie bei einem Signalhorn über ein Gas durch hohen Druck erzeugt, so dass kein zusätzlicher Stromspeicher notwendig ist. Alternativ kann die Signaleinheit einen Stromspeicher, insbesondere eine Batterie, umfassen.

Weiterhin ist es vorteilhaft, wenn die Signaleinheit ein Befestigungsmittel aufweist, so dass die Signaleinheit an dem körpernahen Gegenstand befestigbar ist. Damit die Signaleinheit je nach Kleidung, Accessoires, Jahreszeit einsetzbar ist, ist das Befestigungsmittel vorzugsweise ein Gurt, Klettverschluss und/oder Druckknopf. Die Signaleinheit ist vorzugsweise in einen Stoff oder eine Tasche eingenäht.

Ferner stellt es einen Vorteil dar, wenn die Signaleinheit ein Leuchtelement, insbesondere eine Lampe, umfasst, mittels dem ein optisches Signal erzeugbar ist. Das optische Signal wird vorzugsweise in Form eines Blitzlichtes ausgegeben. Dabei ist die Signaleinheit vorzugsweise an einem sichtbaren Ort angeordnet, so dass das Blitzlicht deutlich zu sehen ist, wenn es erzeugt wird. Vorzugsweise werden das akustische und optische Signal gleichzeitig erzeugt, so dass neben dem lauten Abwehrsignal zusätzlich ein Licht erzeugt wird. Das Leuchtelement ist vorzugsweise über die Bedieneinheit aktivierbar. Die Aktivierung und/oder Deaktivierung des Leuchtelements erfolgt vorzugsweise in analoger Weise zur Aktivierung und/oder Deaktivierung der Sirene der Signaleinheit. Neben der akustischen Ortung ist es somit auch bei Nacht möglich, den Ort des Überfalls schnell zu identifizieren. In Wäldern oder dunklen Gassen kann man hierdurch schnell Aufmerksamkeit auf sich lenken. Die Signaleinheit kann das Leuchtelement zusätzlich aufweisen. Ebenso kann die Signaleinheit jedoch ausschließlich die Sirene umfassen, um das Alarmsignal zu erzeugen.

Vorgeschlagen wird also ein mobiles Abwehrsystem mit einer mobilen Bedieneinheit zum Aktivieren einer mobilen Signaleinheit. Die Signaleinheit ist vorzugsweise gemäß einem oder mehreren der vorherigen und/oder nachfolgenden Merkmale der Beschreibung ausgebildet. Die mobile Bedieneinheit ist vorzugsweise ein Accessoire, ein Armband, eine Halskette, ein Ring, eine schnurlose Telekommunikationseinheit und/oder eine Armbanduhr. Die mobile Bedieneinheit weist eine Eingabeeinheit zur Eingabe eines Aktivierungsbefehls und eine kabellose zweite Schnittstelle auf. Die Eingabeeinheit ist vorzugsweise haptisch und/oder akustisch ausgebildet. Die zweite Schnittstelle ist zum Verbinden mit einer ersten Schnittstelle der dafür vorgesehenen mobilen Signaleinheit ausgebildet. Die Bedieneinheit ist derart ausgebildet, dass mittels dieser eine Sirene der Signaleinheit fernbedient aktivierbar und/oder deaktivierbar ist. Die Bedieneinheit weist eine Speichereinheit auf, in der ein Aktivierungscode hinterlegt ist. Ferner weist die Bedieneinheit eine zweite Steuereinheit auf, die den eingegebenen Aktivierungsbefehl mit dem hinterlegten Aktivierungscode vergleicht und bei Übereinstimmung die Sirene aktiviert.

Vorteilhaft ist es, wenn die Bedieneinheit ein erstes Gerät, insbesondere ein Accessoire, ein Armband, eine Halskette, ein Ring, eine schnurlose Telekommunikationseinheit und/oder eine mobile Uhr, insbesondere Armbanduhr, und ein zweites Gerät, insbesondere eine schnurlose Telekommunikationseinheit, vorzugsweise ein Mobiltelefon, umfasst, die vorzugsweise kabellos miteinander verbindbar und/oder verbunden sind. Vorzugsweise umfasst hierbei das erste Gerät die Eingabeeinheit. Zusätzlich oder alternativ umfasst hierbei das zweite Gerät die kabellose zweite Schnittstelle, die zweite Steuereinheit und/oder die Speichereinheit.

Die Bedieneinheit weist vorzugsweise einen Druckknopf auf, der mit der zweiten Schnittstelle verbunden ist. Alternativ ist die Bedieneinheit vorzugsweise eine, insbesondere schnurlose, Telekommunikationseinheit, vorzugsweise ein Mobiltelefon, welche neben einer haptischen auch eine akustische Bedienung erlaubt. Der Aktivierungsbefehl erfolgt vorzugsweise durch Drücken, Wischen, Fingerabdruck oder einen vorgegebenen akustischen Laut. Durch die Eingabe des Aktivierungsbefehls wird von der zweiten Schnittstelle ein Signal ausgegeben. Die zweite Schnittstelle ist derart ausgebildet, dass sie mit der ersten Schnittstelle der Signaleinheit kommunizieren kann. Durch die Kommunikation der Bedieneinheit mit der Signaleinheit mittels der beiden Schnittstellen ist die Signaleinheit derart steuerbar, dass die Sirene ein Alarmsignal erzeugt. Die Kommunikation der beiden Schnittstellen erfolgt drahtlos.

Auf diese Weise kann die Bedieneinheit beispielsweise in der Hand getragen werden, während die Signaleinheit fest in einer Jackentasche angeordnet ist. Sollte der Träger in eine Gefahrensituation geraten, muss lediglich der haptische oder akustische Aktivierungsbefehl gegeben werden. Infolge der Aktivierung wird die zweite Schnittstelle der Bedieneinheit angesteuert, um ein Signal auszusenden. Die erste Schnittstelle der Signaleinheit empfängt dieses Signal, woraufhin die Sirene aktiviert und ein Alarmsignal erzeugt wird.

Erfindungsgemäß ist in der Speichereinheit ein Deaktivierungscode hinterlegt.

Auch ist es vorgesehen, dass die zweite Steuereinheit derart ausgebildet ist, dass die dafür vorgesehene Signaleinheit nach der Aktivierung ihrer Sirene von der mobilen Bedieneinheit mit einem über die Eingabeeinheit einzugebenden Deaktivierungsbefehl deaktivierbar ist, wobei die zweite Steuereinheit den eingegebenen Deaktivierungsbefehl mit dem hinterlegten Deaktivierungscode vergleicht und bei Übereinstimmung die Signaleinheit deaktiviert.

Die Eingabeeinheit umfasst eine Gestenerkennungseinheit und/oder Spracherkennungseinheit zur Eingabe des Aktivierungsbefehls.

Die Eingabeeinheit weist einen Sensor zur Gestenerkennung und/oder Spracherkennung auf, insbesondere eine Kamera, einen Lagesensor und/oder einen Beschleunigungssensor.

Vorteilhaft ist es, wenn die zweite Steuereinheit derart ausgebildet ist, dass diese über eine, insbesondere schnurlose bzw. kabellose, Telekommunikationseinheit der Bedieneinheit, insbesondere des zweiten Geräts, bei Aktivierung der Signaleinheit automatisch einen Notruf absetzt.

Es ist vorgesehen, dass die Bedieneinheit eine mit der Eingabeeinheit und der zweiten Schnittstelle elektrisch verbundene zweite Steuereinheit aufweist. In der zweiten Steuereinheit ist ein Steuerungsprogramm abgespeichert. Das Steuerprogramm ist vorzugsweise derart ausgebildet, dass die zweite Schnittstelle ein Signal, insbesondere ein Infrarot- oder Funksignal, aussendet, wenn an der Bedieneinheit der Aktivierungsbefehl eingegeben wird. Die zweite Schnittstelle erzeugt das Signal zur Verbindung mit der ersten Schnittstelle. Das Signal beinhaltet vorzugsweise die Information, dass das Abwehrsignal ausgegeben werden soll. Alternativ beinhaltet das Signal die Information, dass das Abwehrsignal beendet werden soll. Die Steuereinheit ist individuell programmierbar, so dass verschiedene Parameter wie die Lautstärke des Abwehrsignals, die Zeitverzögerung oder auch die Melodie des Abwehrsignals eingestellt werden können.

Es ist auch vorgesehen, dass das Steuerungsprogramm derart ausgebildet ist, dass die dafür vorgesehene Signaleinheit nach der Aktivierung mit einem über die Eingabeeinheit einzugebenden Deaktivierungscode deaktivierbar ist. Nachdem von der Bedieneinheit, insbesondere der zweiten Schnittstelle, das Signal zur Aktivierung der Signaleinheit ausgegeben wurde, wird die Bedieneinheit vorzugsweise automatisch durch das Steuerprogramm gesperrt. Durch die Sperrung ist es vorzugsweise nicht möglich, das Abwehrsignal ohne einen Deaktivierungscode abzustellen. Der Deaktivierungscode kann eine Zahlenkombination, ein Passwort oder auch ein Fingerabdruck sein, der mittels eines dafür vorgesehenen Sensors erfasst wird. Es soll hierdurch in jedem Fall verhindert werden, dass das Abwehrsignal ohne großes Zutun einfach abgestellt werden kann.

Das Steuerprogramm ist vorteilhafterweise derart ausgebildet, dass dieses über eine, insbesondere kabellose, Telekommunikationseinheit der Bedieneinheit bei der Aktivierung der Signaleinheit automatisch einen Notruf absetzt. Wenn an der Bedieneinheit der Aktivierungsbefehl vorgenommen wurde, wird vorzugsweise parallel zur Verbindung der beiden Schnittstellen ein Notruf abgesetzt. Alternativ ist es denkbar, dass über die, insbesondere kabellose, Telekommunikationseinheit automatisch eine Nachricht abgesendet wird. Vorzugsweise wird in der Steuereinheit hinterlegt, welche Personen oder Notrufstellen im Fall der Aktivierung der Signaleinheit kontaktiert werden sollen. Ebenso ist es möglich, dass die Bedieneinheit selbst keine Telekommunikationseinheit aufweist, sondern lediglich mit einer verbindbar ist. Die Bedieneinheit sendet vorzugsweise ein Signal ab, durch welches die separate Telekommunikationseinheit angewiesen wird, einen Notruf abzusetzen. Sollte der Angreifer nicht durch das Alarmsignal abgeschreckt werden und das Opfer weiterhin in Gefahr sein, kann hierdurch zeitnah Hilfe gerufen werden.

Es wird also vorgeschlagen ein mobiles Abwehrsystem zum Abwehren von körperlichen Übergriffen mit einer mobilen Signaleinheit zum Mitführen in oder an einem körpernahen Gegenstand und einer mobilen Bedieneinheit zum Aktivieren der mobilen Signaleinheit. Die mobile Signaleinheit umfasst eine Sirene, mittels der ein über einer menschlichen Schmerzempfindungsschwelle liegendes akustisches Abwehrsignal erzeugbar ist. Die mobile Signaleinheit und die mobile Bedieneinheit sind gemäß einem oder mehreren der vorherigen und/oder nachfolgenden Merkmale der Beschreibung ausgebildet.

Vorzugsweise wird die mobile Signaleinheit, sobald man außer Haus geht, in die Jackentasche oder Handtasche gelegt. Die mobile Signaleinheit kann dabei automatisch empfangsbereit sein oder manuell eingeschaltet werden. Im Fall eines körperlichen Übergriffs muss das Opfer lediglich kurz die Bedieneinheit betätigen, mittels deren Steuereinheit zwischen den beiden Schnittstellen der Bedieneinheit und der Signaleinheit eine Verbindung hergestellt wird. Die Steuereinheit der Signaleinheit veranlasst nachdem Empfang eines Signals über die zweite Schnittstelle, dass die Sirene ein Alarmsignal ausgibt. Das Alarmsignal ist derart laut, dass der Angreifer verscheucht wird oder zumindest aufgrund der dadurch erregten Aufmerksamkeit von weiteren Übergriffen auf das Opfer absieht.

Von Vorteil ist es, wenn die mobile Signaleinheit und die mobile Bedieneinheit körperlich getrennt angeordnet sind. Dadurch wird ermöglicht, dass beispielsweise bei einer geklauten Handtasche durch die darin befindliche Signaleinheit trotzdem das Alarmsignal ausgegeben wird. Da der Dieb das Alarmsignal nicht ohne einen Deaktivierungscode ausschalten kann, wird er die Tasche beiseite werfen, um keine Aufmerksamkeit auf sich zu ziehen. Der Bestohlene kann die Tasche dadurch gegebenenfalls in einem geringen Umkreis suchen.

Vorteilhaft ist es, die beiden Schnittstellen derart auszubilden, dass diese in Zeitintervallen miteinander kommunizieren. Dabei könnte beispielsweise jeweils eine Schnittstelle in bestimmten Zeitabständen Signale senden, welche von der jeweils anderen Schnittstelle empfangen werden. Wenn keine Signale empfangen werden können, beispielsweise weil die beiden Schnittstellen zu weit voneinander entfernt sind, wird vorzugsweise automatisch das Alarmsignal ausgelöst. Dabei kann es zweckmäßig sein, den Träger in Abständen über den Zustand beider Schnittstellen zu informieren, damit der Alarm nicht aufgrund eines zu niedrigen Akkus oder dergleichen ausgelöst wird. Wenn sich die beiden Schnittstellen und somit die Signal- und die Bedieneinheit beispielsweise über eine festgelegte Distanz voneinander entfernen, kann das Alarmsignal automatisch ausgelöst werden. Dabei ist es vorzugsweise nicht notwendig, zusätzlich einen Befehl über das Bedienelement oder das Betätigungselement zu veranlassen.

Ferner ist es von Vorteil, wenn die Signaleinheit in einem Bekleidungsstück oder einem Tragebehältnis eingenäht ist. Auf diese Weise wird verhindert, dass der Dieb oder Angreifer die Signaleinheit einfach aus dem Tragebehältnis entfernen und wegwerfen kann.

Weitere Vorteile der Erfindung sind in den nachfolgenden Ausführungsbeispielen beschrieben. Es zeigt:

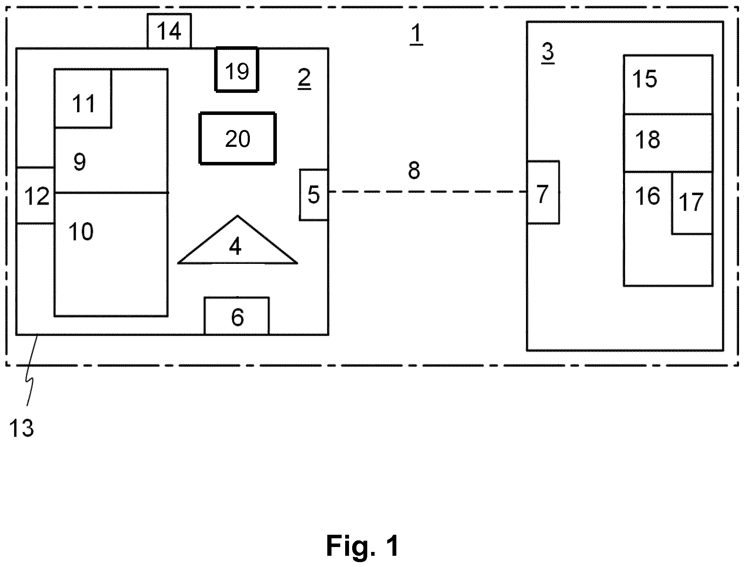

- **Figur 1**: schematische Ansicht eines mobilen Abwehrsystems.

Die Figur 1 zeigt die Funktionsweise eines mobilen Abwehrsystems 1 in einer schematischen Darstellung. Das mobile Abwehrsystem 1 ist vorgesehen, um körperliche Übergriffe abzuwehren. Es wird von einer mobilen Signaleinheit 2 und einer mobilen Bedieneinheit 3 ausgebildet. Zur Veranschaulichung des Zusammenwirkens der mobilen Signaleinheit 2 und der mobilen Bedieneinheit 3, sind diese gemeinsam in dem mobilen Abwehrsystem 1 dargestellt. In der Praxis ist es vorgesehen, dass die Signaleinheit 2 und die Bedieneinheit 3 körperlich voneinander getrennt angeordnet sind. Die mobile Signaleinheit 2 ist derart ausgebildet, dass es bei geplanter Benutzung in einen körpernahen Gegenstand wie ein Bekleidungsstück oder ein Tragebehältnis gelegt werden kann. Alternativ ist es denkbar, die mobile Signaleinheit 2 fest in einen dafür vorgesehenen Gegenstand zu integrieren, insbesondere einzunähen, damit die Signaleinheit 2 dauerhaft mitgeführt wird. Die mobile Bedieneinheit 3 ist beispielsweise ein Accessoire, welches vorzugsweise im Alltag häufig benutzt wird, ein Armband, eine Halskette, ein Ring, eine schnurlose Telekommunikationseinheit und/oder eine Armbanduhr.

Die mobile Signaleinheit 2 weist eine Sirene 4 auf. Die Sirene 4 ist ausgebildet, um ein über einer menschlichen Schmerzempfindungsschwelle liegendes akustisches Abwehrsignal zu erzeugen. Die Schmerzempfindungsschwelle liegt etwa im Bereich über 100 db und/oder 20 Pa. Die Signaleinheit 4 umfasst eine kabellose erste Schnittstelle 5, über die die Sirene 4 fernbedient aktivierbar und/oder deaktivierbar ist. Die Aktivierung der Sirene 4 kann vorzugsweise auch über ein Betätigungselement 6 der mobilen Signaleinheit 2 erfolgen. Das Betätigungselement 6 ist derart ausgebildet, dass die Sirene 4 manuell aktivierbar ist.

Die mobile Signaleinheit 2 ist über die mobile Bedieneinheit 3 betätigbar. Hierzu ist die erste Schnittstelle 5 mit einer zweiten Schnittstelle 7 der mobilen Bedieneinheit 3 kabellos verbindbar. Die beiden Schnittstellen 5, 7 sind vorzugsweise miteinander korrespondierende Funk- oder Infrarotschnittstellen. Die erste Schnittstelle 5 ist ausgebildet, ein Signal 8 der zweiten Schnittstelle 7 zu empfangen und zu verarbeiten. Mittels des Signals 8 sind die beiden Schnittstellen 5, 7 und somit die Bedieneinheit 3 und die Signaleinheit 2 kabellos miteinander verbunden.

Die Signaleinheit 2 ist derart ausgebildet, dass die Sirene 4 mit einem Aktivierungsbefehl manuell aktivierbar ist, wenn der Aktivierungsbefehl mit einem in einer Speichereinheit 20 der Signaleinheit 2 hinterlegten Aktivierungscode übereinstimmt. In einem vorliegend nicht dargestellten Ausführungsbeispiel kann die Speichereinheit 20 auch in der Bedieneinheit 3 angeordnet sein. Zusätzlich kann die Signaleinheit 2 derart ausgebildet sein, dass die Sirene 4 nach dem kabellosen Verbinden mit der Bedieneinheit 3 automatisch aktivierbar ist, wenn eine Verbindungssignalstärke der Bedieneinheit 3 einen Schwellwert unterschreitet und/oder die kabellose Verbindung zur Bedieneinheit 3 unterbrochen wird.

Die erste und zweite Schnittstelle 5, 7 ist unidirektional ausgebildet, so dass über diese ausschließlich Signale 8 empfangen werden können, oder bidirektional ausgebildet, so dass sowohl Signale 8 empfangen als auch gesendet werden können.

Die Signaleinheit 2 weist ein Sperrsystem 9 auf, mittels dem die Sirene 4 nach ihrer Aktivierung nur mit einem unmittelbar in die Signaleinheit 2 eingebbaren oder mittelbar von der dafür vorgesehene Bedieneinheit 3 übermittelten Deaktivierungsbefehl 11 deaktivierbar ist, wenn dieser Deaktivierungsbefehl mit einem in der Speichereinheit 20 der Signaleinheit 2 und/oder der dafür vorgesehenen Bedieneinheit 3 hinterlegten Deaktivierungscode übereinstimmt.

Die Signaleinheit 2 umfasst eine erste Steuereinheit 10, mit der der Aktivierungsbefehl mit dem in der Speichereinheit 20 hinterlegten Aktivierungscode abgleichbar ist. Des Weiteren ist die erste Steuereinheit 10 derart ausgebildet, dass der Deaktivierungsbefehl mit dem hinterlegten Deaktivierungscode vergleichbar ist, die kabellose Verbindung zur Bedieneinheit 3 überwachbar ist und/oder die Sirene 4 zum Aktivieren und/oder Deaktivieren ansteuerbar ist.

Die mobile Bedieneinheit 3 umfasst eine Eingabeeinheit 15 zur Eingabe des Aktivierungsbefehls und die kabellose zweite Schnittstelle 7 zum Verbinden mit der ersten Schnittstelle 5 der mobilen Signaleinheit 2, so dass mittels der Bedieneinheit 3 die Sirene 4 der Signaleinheit 2 fernbedient aktivierbar und/oder deaktivierbar ist. Die Bedieneinheit 3 kann in einem nicht dargestellten Ausführungsbeispiel die Speichereinheit 20 aufweist, in der der Aktivierungscode hinterlegt ist. Des Weiteren weist die mobile Bedieneinheit 3 eine zweite Steuereinheit 16 auf, die den vom Benutzer eingegebenen Aktivierungsbefehl mit dem in der Speichereinheit 20 hinterlegten Aktivierungscode vergleicht und bei Übereinstimmung die Sirene 4 aktiviert.

Die Bedieneinheit 3 kann mehrere Geräte umfassen. So kann die Bedieneinheit 3 beispielsweise ein erstes Gerät, insbesondere ein Accessoire, ein Armband, eine Halskette, ein Ring, eine schnurlose Telekommunikationseinheit und/oder eine Armbanduhr, und ein zweites Gerät, insbesondere eine, vorzugsweise schnurlose, Telekommunikationseinheit, umfassen, die vorzugsweise kabellos miteinander verbindbar und/oder verbunden sind.

Vorzugsweise umfasst hierbei das erste Gerät die Eingabeeinheit 15. Das zweite Gerät umfasst hierbei vorzugsweise die kabellose zweite Schnittstelle 7, die zweite Steuereinheit 16 und/oder die Speichereinheit 20, sofern diese nicht in der Signaleinheit 2, sondern in der Bedieneinheit 3 angeordnet ist.

In der Speichereinheit 20, die in der Signaleinheit und/oder in der Bedieneinheit 3 angeordnet sein kann, ist ein Deaktivierungscode hinterlegt. Des Weiteren ist die zweite Steuereinheit 16 derart ausgebildet, dass die Signaleinheit 2 nach der Aktivierung ihrer Sirene 4 von der mobilen Bedieneinheit 3 mit einem über die Eingabeeinheit 15 einzugebenden Deaktivierungsbefehl deaktivierbar ist. Hierfür vergleicht die zweite Steuereinheit 16 den eingegebenen Deaktivierungsbefehl mit dem hinterlegten Deaktivierungscode und deaktiviert die Sirene 4 bei Übereinstimmung.

Die Eingabeeinheit 15 umfasst eine vorliegend nicht dargestellte Gestenerkennungseinheit und/oder Spracherkennungseinheit zur Eingabe des Aktivierungsbefehls. Hierfür weist die Eingabeeinheit 15 einen Sensor zur Gestenerkennung und/oder Spracherkennung auf, insbesondere eine Kamera, einen Lagesensor und/oder einen Beschleunigungssensor.

Die zweite Steuereinheit 16 ist derart ausgebildet, dass diese über eine, insbesondere kabellose, Telekommunikationseinheit 18 der Bedieneinheit 3, insbesondere des vorliegend nicht dargestellten zweiten Geräts, bei Aktivierung der Signaleinheit 2 automatisch einen Notruf absetzt.

Unabhängig davon, ob die Signaleinheit 2 von der Bedieneinheit 3 oder über das Betätigungselement 6 aktiviert wurde, ist die Signaleinheit 2 ausgebildet, vor weiteren Befehlen, insbesondere einer Deaktivierung des Abwehrsignals, gesperrt zu werden. Nachdem die Signaleinheit 2 aktiviert wurde, veranlasst die erste Steuereinheit 10, dass die Signaleinheit 2 von dem Sperrsystem 9 gesperrt wird, so dass das Abwehrsignal der Sirene 4 nicht abgeschaltet werden kann. Durch die Sperrung der Signaleinheit 2 kann die Sirene 4 nur dann deaktiviert werden, wenn über das Betätigungselement 6 oder die Bedieneinheit 3 ein definierter Deaktivierungscode 11 erfasst wird. Der Deaktivierungscode 11 kann beispielsweise ein mehrmaliges Drücken des Betätigungselements 6 sein. Ebenso kann der Deaktivierungscode 6 in Form einer Zahlen- oder Buchstabenfolge an der Bedieneinheit 3 eingegeben werden. Wenn die erste Steuereinheit 10 erfasst, dass der richtige Deaktivierungscode 11 eingegeben wurde, ist es möglich, die Sirene 4 abzuschalten.

Damit die Signaleinheit 2 jederzeit aktiviert werden kann, weist sie einen Stromspeicher 12 auf. Über den Stromspeicher 12 kann die Signaleinheit 2 bei Bedarf, insbesondere wenn man Zuhause und außer Gefahr ist, aus- und einschalten. Die Signaleinheit 2 ist in einem Schutzgehäuse 13 angeordnet. Das Schutzgehäuse 13 ist derart ausgebildet, dass die Sirene 4 selbst bei Gewalteinwirkung nicht ohne den Deaktivierungscode 11 abgeschaltet werden kann. Die Signaleinheit 2 weist Befestigungsmittel 14 auf, damit diese einfach an dafür vorgesehenen Orten befestigt werden kann.

Vorzugsweise ist die Sirene 4 eine mit Gas und/oder elektrisch betriebene Sirene 4, wobei das Betätigungselement 6 eine Drucktaste ist. Wenn das Betätigungselement bedient, insbesondere gedrückt, wird, wird durch das Gas das Alarmsignal erzeugt. Alternativ wird die Sirene 4 aktiviert, indem über Bedieneinheit 3 ein Aktivierungsbefehl, insbesondere das Signal 8, abgesendet wird. Wenn die Sirene 4 mit Gas betrieben wird, ist kein zusätzlicher Stromspeicher 12 notwendig. Durch eine entsprechende elektromechanische Ausbildung der Signaleinheit 2, wird sodann die Sirene 4 ausgelöst.

Die Bedieneinheit 3 weist eine Eingabeeinheit 15 auf. Die Eingabeeinheit 15 weist eine zweite Steuereinheit 16 auf. In der zweiten Steuereinheit 16 ist ein Steuerungsprogramm 17 abgespeichert. Wenn von der Eingabeeinheit 15 der Befehl zur Aktivierung des Abwehrsignals erfasst wird, veranlasst die zweite Steuereinheit 16, dass die zweite Schnittstelle 7 an die erste Schnittstelle 5 das Signal 8 zur Aktivierung der Sirene 4 sendet. Parallel oder unmittelbar danach wird die Bedieneinheit 3 von dem Steuerungsprogramm 17 gesperrt. Durch die Sperrung der Bedieneinheit 3 wird verhindert, dass das Abwehrsignal ohne eine Hürde deaktiviert werden kann. Denkbar ist, dass das Steuerungsprogramm 17 die Aktivierung des Sperrsystems 9 der Signaleinheit 2 veranlasst, so dass die Deaktivierung des Abwehrsignals an der Signaleinheit 2 selbst unterbunden ist. Dadurch könnte das Opfer, beispielsweise im Fall einer geklauten Handtasche, selbst einen Notruf mit der Bedieneinheit 3 absetzen.

Um die Sirene 4 deaktivieren zu können, muss in die Eingabeeinheit 15 der Deaktivierungscode 11 eingegeben werden. Dabei wird der Deaktivierungscode 11 mit den in dem Sperrsystem 9 der Signaleinheit 2 hinterlegten Daten abgeglichen. Alternativ wird der Deaktivierungscode 11 direkt an der Signaleinheit 2 eingegeben. Wenn in der zweiten Steuereinheit 16 der richtige Deaktivierungscode 11 erfasst wird, sendet die zweite Schnittstelle 7 ein erneutes Signal 8 an die erste Schnittstelle 5, um die Erzeugung des Alarmsignals zu beenden.

Ergänzend kann es sinnvoll sein, wenn die Bedieneinheit 3 eine, insbesondere kabellose, Telekommunikationseinheit 18 umfasst. In dem Steuerungsprogramm 17 können Telefonnummern hinterlegt sein, welche im Fall der Aktivierung des Abwehrsignals automatisch kontaktiert werden. Alternativ kann die Bedieneinheit 3 derart mit einer, insbesondere kabellosen, Telekommunikationseinheit 18 drahtlos verbunden sein. Im Notfall sendet die Bedieneinheit 3, beispielsweise über die zweite Schnittstelle 7, ein Notsignal ab, welches von der Telekommunikationseinheit 18 empfangen wird. Die Telekommunikationseinheit 18 setzt sodann automatisch einen Notruf ab.

Die Signaleinheit 2 kann ein Leuchtelement 19 aufweisen. Das Leuchtelement 19 ist ausgebildet, zeitgleich zum akustischen Abwehrsignal der Sirene 4 ein optisches Signal zu erzeugen. Das optische Signal ist vorzugsweise ein Blitzlicht. Das Leuchtelement 19 kann ebenso als Lampe, Drehspiegelleuchte, LED-Leuchte oder Blinkleuchte ausgebildet sein.

In einem bevorzugten Ausführungsbeispiel ist es somit denkbar, dass die mobile Bedieneinheit 3 ein erstes Bediengerät, insbesondere ein Accessoire, ein Armband, eine Halskette, ein Ring, eine schnurlose Telekommunikationseinheit und/oder eine Armbanduhr ist. Zuvor wurden vom Benutzer ein Aktivierungscode und/oder ein Deaktivierungscode festgelegt und in der Speichereinheit 20 abgespeichert. Dies kann beispielsweise durch das anlernen einer Geste, insbesondere einer Handbewegung, erfolgen. Eine derartige Geste, insbesondere Handbewegung, kann durch die Sensorik der Bedieneinheit erkannt werden. In dem ersten Bediengerät kann die zweite Steuereinheit 16 integriert sein. Alternativ ist es auch denkbar, dass das erste Bediengerät mit einem weiteren Gerät, beispielsweise einer, vorzugsweise schnurlosen, Telekommunikationseinheit, verbunden ist. Die, vorzugsweise schnurlose, Telekommunikationseinheit würde somit Bestandteil der mobilen Bedieneinheit 3 sein. Die zweite Steuereinheit 16 wäre somit in der, vorzugsweise schnurlosen, Telekommunikationseinheit integriert. Bei einem Körperlichen Übergriff würde der Benutzer somit beispielsweise eine Abwehrbewegung vornehmen, die den gestengesteuerten Aktivierungsbefehl repräsentiert. Die Handbewegung würde von der Sensorik des ersten Bediengerätes, insbesondere des Accessoires, der Armband, der Halskette, des Rings und/oder der Armbanduhr, erkannt werden und von der zweiten Steuereinheit 16 mit dem in der Speichereinheit 20 hinterlegten Aktivierungscode verglichen werden. Bei Übereinstimmung würde somit umgehend die Sirene 4 der mobilen Signaleinheit 2 aktiviert werden. Alternativ könnte dieser Abgleich von Aktivierungsbefehl und Aktivierungscode von der ersten Steuereinheit 10 der mobilen Signaleinheit 2 durchgeführt werden. Eine Deaktivierung könnte in analoger Weise erfolgen.

### Bezugszeichenliste

- 1: Mobiles Abwehrsystem
- 2: mobile Signaleinheit
- 3: mobile Bedieneinheit
- 4: Sirene
- 5: erste Schnittstelle
- 6: Betätigungselement
- 7: zweite Schnittstelle
- 8: Signal
- 9: Sperrsystem
- 10: erste Steuereinheit
- 11: Deaktivierungscode
- 12: Stromspeicher
- 13: Schutzgehäuse
- 14: Befestigungsmittel
- 15: Eingabeeinheit
- 16: zweite Steuereinheit
- 17: Steuerungsprogramm
- 18: Telekommunikationseinheit
- 19: Leuchtelement
- 20: Speichereinheit

## Patentansprüche

1. Mobiles Abwehrsystem für einen Benutzer zum Abwehren von körperlichen Übergriffen eines Angreifers
mit einer mobilen Signaleinheit (2) zum Mitführen in oder an einem Gegenstand und
mit einer mobilen Bedieneinheit (3) zum Aktivieren und/oder Deaktivieren der mobilen Signaleinheit (2),
wobei die mobile Signaleinheit (2) mindestens eine Sirene (4), mittels der ein über einer menschlichen Schmerzempfindlichkeitsschwelle liegendes akustisches Abwehrsignal erzeugbar ist, um den Angreifer durch das Abwehrsignal zu erschrecken und zu verscheuchen, und eine kabellose erste Schnittstelle (5), über die die Sirene (4) von der mobilen Bedieneinheit (3) fernbedient aktivierbar ist, umfasst;
wobei die mobile Bedieneinheit (3) eine Eingabeeinheit (15) zur Eingabe eines Aktivierungsbefehls und zur manuellen Aktivierung der Sirene (4) und eine kabellose zweite Schnittstelle (7) zum Verbinden mit der ersten Schnittstelle (5) der mobilen Signaleinheit (2) umfasst;
wobei die Signaleinheit (2) oder die Bedieneinheit (3) eine Speichereinheit (20) umfasst;
wobei die Signaleinheit (2) eine erste Steuereinheit (10) und die mobile Bedieneinheit (3) eine zweite Steuereinheit (16) umfasst,
wobei die erste oder die zweite Steuereinheit (10, 16) den Aktivierungsbefehl mit einem vom Benutzer festgelegten und in der Speichereinheit (20) abgespeicherten Aktivierungscode vergleicht und bei Übereinstimmung die Sirene (4) aktiviert;
wobei die Signaleinheit (2) ein Sperrsystem (9) aufweist, mittels dem die Sirene (4) nach ihrer Aktivierung nur mit einem unmittelbar in die Signaleinheit (2) eingebbaren Deaktivierungsbefehl (11) deaktivierbar ist oder mittelbar von der Bedieneinheit (3) übermittelten Deaktivierungsbefehl (11) deaktivierbar ist, wenn dieser Deaktivierungsbefehl mit einem vom Benutzer festgelegten und in der Speichereinheit (20) abgespeicherten Deaktivierungscode übereinstimmt, wobei die erste oder die zweite Steuereinheit (10, 16) den eingegebenen Deaktivierungsbefehl mit dem hinterlegten Deaktivierungscode vergleicht und bei Übereinstimmung die Signaleinheit (2) deaktiviert, so dass das Abwehrsignal von dem Angreifer nicht ausgeschaltet werden kann,
wobei der Aktivierungsbefehl eine Geste und/oder ein Sprachbefehl ist und die Eingabeeinheit (15) eine Gestenerkennungseinheit mit einem Sensor zur Gestenerkennung und/oder eine Spracherkennungseinheit mit einem Sensor zur Spracherkennung zur Eingabe des Aktivierungsbefehls aufweist.

2. Mobiles Abwehrsystem nach dem vorherigen Anspruch, **dadurch gekennzeichnet, dass** die erste Schnittstelle (5) unidirektional ausgebildet ist, so dass über diese ausschließlich Signale (8) empfangen werden können, oder
bidirektional ausgebildet ist, so dass sowohl Signale (8) empfangen als auch gesendet werden können.

3. Mobiles Abwehrsystem nach einem der vorherigen Ansprüche,
**dadurch gekennzeichnet, dass** die Signaleinheit (2) zumindest ein Betätigungselement (6) aufweist, mittels dem der Deaktivierungsbefehl (11) zum Deaktivieren der Sirene (4) eingebbar ist.

4. Mobiles Abwehrsystem nach einem der vorherigen Ansprüche,
**dadurch gekennzeichnet, dass** die Signaleinheit (2) ein Schutzgehäuse (13) aufweist, in dem die Sirene (4), die erste Steuereinheit (10), ein Stromspeicher (12) und/oder die erste Schnittstelle (5) vor äußerer Gewalteinwirkung geschützt aufgenommen ist.

5. Mobiles Abwehrsystem nach einem der vorherigen Ansprüche,
**dadurch gekennzeichnet, dass** die Signaleinheit (2) ein Leuchtelement (19) umfasst, mittels dem ein optisches Signal erzeugbar ist.

6. Mobiles Abwehrsystem nach einem der vorherigen Ansprüche,
**dadurch gekennzeichnet, dass** die Bedieneinheit (3) ein erstes Gerät und ein zweites Gerät umfasst, wobei das erste Gerät die Eingabeeinheit (15) und das zweite Gerät die kabellose zweite Schnittstelle (7), die zweite Steuereinheit (16) und/oder die Speichereinheit umfasst.

7. Mobiles Abwehrsystem nach einem der vorherigen Ansprüche,
**dadurch gekennzeichnet, dass** die zweite Steuereinheit (16) derart ausgebildet ist, dass diese über eine schnurlose Telekommunikationseinheit (18) der Bedieneinheit (3) bei Aktivierung der Signaleinheit (2) automatisch einen Notruf absetzt.

## Claims

1. Mobile defense system for a user for defending against physical attacks by an attacker
having a mobile signal unit (2) for being carried in or on an object and having a mobile operating unit (3) for activating and/or deactivating the mobile signal unit (2),
wherein the mobile signal unit (2) has at least one siren (4), by means of which an acoustic defense signal lying above a human pain sensitivity threshold can be generated in order to scare and scare off the attacker by the defense signal, and
a wireless first interface (5), via which the siren (4) can be activated in a remote-controlled manner by the mobile operating unit (3);
wherein the mobile operating unit (3) has an input unit (15) for entering an activation command and for manually activating the siren (4) and a wireless second interface (7) for connecting to the first interface (5) of the mobile signal unit (2);
wherein the signal unit (2) or the operating unit (3) has a memory unit (20);
wherein the signal unit (2) has a first control unit (10) and the mobile operating unit (3) has a second control unit (16),
wherein the first or the second control unit (10, 16) compares the activation command with an activation code stipulated by the user and stored in the memory unit (20) and activates the siren (4) in the event of coincidence;
wherein the signal unit (2) has a locking system (9), by means of which the siren (4) can be deactivated after its activation only with a deactivation command (11) which can be entered directly into the signal unit (2) or can be deactivated indirectly by the deactivation command (11) transmitted by the operating unit (3) if this deactivation command coincides with a deactivation code stipulated by the user and stored in the memory unit (20), wherein the first or the second control unit (10, 16) compares the entered deactivation command with the stored deactivation code and deactivates the signal unit (2) in the event of coincidence, with the result that the defense signal cannot be switched off by the attacker,
wherein
the activation command is a gesture and/or a voice command and the input unit (15) has a gesture recognition unit with a sensor for gesture recognition and/or a voice recognition unit with a sensor for voice recognition for entering the activation command.

2. Mobile defense system according to the preceding claim, **characterized in that** the first interface (5) is of unidirectional design, with the result that only signals (8) can be received via it, or
is of bidirectional design, with the result that both signals (8) can be received and transmitted.

3. Mobile defense system according to one of the preceding claims,
**characterized in that** the signal unit (2) has at least one actuating element (6), by means of which the deactivation command (11) for deactivating the siren (4) can be entered.

4. Mobile defense system according to one of the preceding claims,
**characterized in that** the signal unit (2) has a protective housing (13), in which the siren (4), the first control unit (10), a power storage unit (12) and/or the first interface (5) are accommodated in a manner protected against the effect of external force.

5. Mobile defense system according to one of the preceding claims,
**characterized in that** the signal unit (2) has a lighting element (19), by means of which an optical signal can be generated.

6. Mobile defense system according to one of the preceding claims,
**characterized in that** the operating unit (3) has a first device and a second device, wherein the first device has the input unit (15) and the second device has the wireless second interface (7), the second control unit (16) and/or the memory unit.

7. Mobile defense system according to one of the preceding claims,
**characterized in that** the second control unit (16) is designed in such a way that it automatically emits an emergency call via a cordless telecommunication unit (18) of the operating unit (3) when the signal unit (2) is activated.

## Revendications

1. Système de défense mobile pour un utilisateur pour défendre des agressions physiques d'un agresseur
comprenant une unité de signalisation mobile (2) destinée à être transportée dans ou sur un objet et
comprenant une unité de commande mobile (3) destinée à activer et/ou désactiver l'unité de signalisation mobile (2),
l'unité de signalisation mobile (2) comprenant au moins une sirène (4) au moyen de laquelle un signal de défense acoustique situé au-dessus d'un seuil de sensibilité à la douleur humaine peut être généré pour effrayer et effaroucher l'agresseur par le signal de défense, et une première interface sans fil (5) par le biais de laquelle la sirène (4) peut être activée à distance par l'unité de commande mobile (3) ;
l'unité de commande mobile (3) comprenant une unité d'entrée (15) destinée à l'entrée d'une instruction d'activation et à l'activation manuelle de la sirène (4) et une deuxième interface sans fil (7) destinée à être connectée à la première interface (5) de l'unité de signalisation mobile (2) ;
l'unité de signalisation (2) ou l'unité de commande (3) comprenant une unité de mémoire (20) ;
l'unité de signalisation (2) comprenant une première unité de commande (10) et l'unité de commande mobile (3) comprenant une deuxième unité de commande (16),
la première ou la deuxième unité de commande (10, 16) comparant l'instruction d'activation à un code d'activation défini par l'utilisateur et stocké dans l'unité de mémoire (20) et activant la sirène (4) en cas de coïncidence ;
l'unité de signalisation (2) comprenant un système de verrouillage (9) au moyen duquel la sirène (4) ne peut être désactivée après son activation qu'avec une instruction de désactivation (11) pouvant être entrée directement dans l'unité de signalisation (2) ou peut être désactivée indirectement par l'unité de commande (3) lorsque cette instruction de désactivation coïncide avec un code de désactivation défini par l'utilisateur et stocké dans l'unité de mémoire (20), la première ou la deuxième unité de commande (10, 16) comparant l'instruction de désactivation entrée au code de désactivation stocké et désactivant l'unité de signalisation (2) en cas de coïncidence de sorte que le signal de défense ne puisse pas être désactivé par l'agresseur,
dans lequel
l'instruction d'activation est un geste et/ou une commande vocale et l'unité d'entrée (15) comprend une unité de reconnaissance gestuelle avec un capteur pour la reconnaissance gestuelle et/ou une unité de reconnaissance vocale avec un capteur pour la reconnaissance vocale pour l'entrée de l'instruction d'activation.

2. Système de défense mobile selon la revendication précédente, **caractérisé en ce que** la première interface (5) est réalisée de manière unidirectionnelle de sorte que seuls des signaux (8) puissent être reçus par l'intermédiaire de celle-ci, ou
est réalisée de manière bidirectionnelle de sorte que des signaux (8) puissent être reçus et envoyés.

3. Système de défense mobile selon l'une quelconque des revendications précédentes, **caractérisé en ce que** l'unité de signalisation (2) comprend au moins un élément d'actionnement (6) au moyen duquel l'instruction de désactivation (11) pour désactiver la sirène (4) peut être entrée.

4. Système de défense mobile selon l'une quelconque des revendications précédentes, **caractérisé en ce que** l'unité de signalisation (2) comprend un boîtier de protection (13) dans lequel la sirène (4), la première unité de commande (10), un stockage d'énergie (12) et/ou la première interface (5) sont reçus de manière protégée contre l'action de la force extérieure.

5. Système de défense mobile selon l'une quelconque des revendications précédentes, **caractérisé en ce que** l'unité de signalisation (2) comprend un élément lumineux (19) au moyen duquel un signal optique peut être généré.

6. Système de défense mobile selon l'une quelconque des revendications précédentes, **caractérisé en ce que** l'unité de commande (3) comprend un premier appareil et un deuxième appareil, le premier appareil comprenant l'unité d'entrée (15) et le deuxième appareil comprenant la deuxième interface sans fil (7), la deuxième unité de commande (16) et/ou l'unité de mémoire.

7. Système de défense mobile selon l'une quelconque des revendications précédentes, **caractérisé en ce que** la deuxième unité de commande (16) est réalisée de telle sorte que celle-ci envoie automatiquement un appel d'urgence par l'intermédiaire d'une unité de télécommunication sans cordon (18) de l'unité de commande (3) lors de l'activation de l'unité de signalisation (2).
